# FASCICULE DE BREVET EUROPEEN

(11) **EP 0 623 280 B1**
(45) Date de publication et mention de la délivrance du brevet: **21.01.1998**
(21) Numéro de dépôt: 94400704.6
(22) Date de dépôt: 31.03.1994
(51) Int. Cl.: A01M 7/00

(54) **Dispositif de contrôle d'un appareil de pulvérisation agricole**
Steuervorrichtung für eine landwirtschaftliche Feldspritze
Control device for an agricultural spraying apparatus

(30) Priorité: 31.03.1993 FR 9303754; 03.01.1994 FR 9400011
(43) Date de publication de la demande: 09.11.1994
(73) Titulaire: EXEL INDUSTRIES, 51200 Epernay (FR)
(72) Inventeur: Ballu, Patrick Jean-Marie, F-51100 Reims (FR)
(74) Mandataire: Colas, Jean-Pierre

(56) Documents cités:
- EP-A- 0 458 107
- US-A- 4 553 702
- US-A- 4 629 164

## Description

La présente invention est relative à un appareil mobile de pulvérisation agricole pourvu d'un ensemble de commande.

De façon classique, un pulvérisateur agricole comprend une cuve de pulvérisation, au moins une pompe pour le liquide, et une rampe à deux bras, divisée en plusieurs tronçons équipés de pulvérisateurs, et des moyens pour replier ou déplacer les tronçons, ainsi que des moyens pour régler la hauteur et l'inclinaison de la rampe, ces éléments étant portés par un tracteur et/ou par une remorque attelée à un tracteur.

La conduite d'un tel appareil se fait à partir d'un poste de conduite équipé de moyens classiques de commande du déplacement du véhicule : volant, pédales de frein et d'accélérateur, etc.. et, en plus, d'un boîtier de commande de la pulvérisation placé dans la cabine de pilotage du tracteur. Ce boîtier de commande est complexe. A titre d'exemple, un tel boîtier, qui est commercialisé actuellement, comporte au total :
- un potentiomètre de réglage du volume/ha désiré,
- huit interrupteurs commandant la pulvérisation par tronçon de rampe,
- huit témoins associés chacun à un des huit interrupteurs,
- un interrupteur à six positions commandant les pompes et la pulvérisation de la rampe,
- quatre interrupteurs de verrouillage de la rampe, et de dépli et repli partiel ou total des bras de rampe,
- un interrupteur de réglage de hauteur de rampe,
- trois interrupteurs de réglage de l'inclinaison et de devers des bras de rampe,
- deux écrans d'affichage de volume/ha désiré ou réel, avec bouton de commande, et de vitesse d'avancement,
- trois témoins de contrôle des différentes fonctions,
- une alarme sonore.

Un boîtier de commande analogue est décrit dans EP-A-0458107.

Grâce à de tels boîtiers de commande, l'opérateur peut contrôler au mieux la pulvérisation, et seules les opérations qui sont faites avant ou après la pulvérisation proprement dite exigent des opérations manuelles non télécommandées, et en particulier des ouvertures et fermetures de vannes.

Les opérations préparatoires à une pulvérisation comprennent en particulier le remplissage de la cuve de pulvérisation avec de l'eau, l'incorporation d'un produit de traitement au contenu de la cuve, après ou pendant le remplissage, et le maintien d'une agitation dans la cuve de pulvérisation pour éviter une sédimentation pendant un trajet.

Dans un pulvérisateur classique, on utilise pour cela une pompe de circulation et une trémie à produit de traitement, avec une vanne à trois voies qui permet d'envoyer le liquide refoulé par la pompe soit vers la partie haute de la cuve de pulvérisation, soit vers sa partie basse, une deuxième vanne à trois voies qui permet de relier l'aspiration de la pompe soit à une tuyauterie d'aspiration extérieure soit à la partie basse de la cuve de pulvérisation et deux vannes à deux voies placées respectivement sur la conduite reliant le refoulement de la pompe à la partie basse de la cuve de pulvérisation et entre cette conduite et la trémie de produit de traitement.

Après une pulvérisation, le rinçage de l'appareillage est obtenu en faisant passer du liquide provenant d'une cuve de rinçage ou d'un récipient extérieur à travers la cuve de pulvérisation, les conduites et les buses, ce qui nécessite encore au moins une vanne de plus.

Toutes ces vannes sont commandées manuellement, avec, par conséquent, des risques de fausse-manoeuvre. L'opérateur, en effet, doit contrôler non seulement la position des vannes, mais encore les débits, les degrés de remplissage des cuves et de la trémie etc.., afin d'éviter les formations de mousse, les refoulements, les surpressions, les débordements, les désamorçages de pompe, les surcharges d'appareils moteurs, les décantations, les mélanges incomplets, etc..

D'autres éléments d'appareillage existent généralement, comme un agitateur de cuve de pulvérisation, une pompe auxiliaire, des vannes de vidange, etc.., et il convient de s'assurer de leur bonne marche ou de leur bonne position, ou du fait que deux appareils ne sont pas mis en route alors qu'ils ne doivent pas fonctionner simultanément, etc..

Le document EP-A-0086061 (US 4 629 164) propose un système qui apporte une solution à certains de ces problèmes.

Selon ce système, des récipients démontables sont remplis en atelier avec un produit de traitement ou avec un diluant, ils sont montés sur l'appareil et branchés chacun sur une pompe qui est propre au récipient. Un ordinateur de bord commande la pompe pour envoyer le contenu d'un récipient choisi vers les pulvérisateurs, à travers un circuit commun. En fin de pulvérisation, l'ordinateur commmande le rinçage du circuit commun avec le diluant, et les récipients sont débranchés et retournent à l'atelier.

Les opérations à faire avant et après la pulvérisation sur l'appareil se bornent à des manipulations de récipients et à un rinçage d'une partie du circuit de fluide.

Ce système exige un atelier spécialement équipé avec retour de l'appareil à cet atelier chaque fois qu'un récipient est vide. En outre, il est mal adapté à pulvériser des produits dilués, qui exigent des récipients volumineux.

La présente invention a pour but de simplifier le travail de l'opérateur et de minimiser les risques d'incidents lors de l'utilisation d'un pulvérisateur agricole, tout en permettant l'emploi d'un appareillage de type classique, permettant l'emploi de produits dilués, et en évitant la nécessité d'un atelier spécialement équipé.

Pour obtenir ce résultat, l'invention fournit un appareil mobile de pulvérisation agricole comprenant :
- un ensemble de pulvérisation qui peut être monté sur un véhicule porteur, autonome ou remorqué, et comporte au moins une cuve de pulvérisation, une pompe, reliée à la cuve de pulvérisation et un circuit de fluide comprenant des pulvérisateurs et des conduits les reliant à la pompe,
- un ensemble de commande pour contrôler le fonctionnement de l'appareil au cours d'une opération de pulvérisation, cet ensemble de commande comprenant un dispositif de commande situé dans une cabine de pilotage à proximité de moyens pour commander les déplacements du véhicule porteur,
- et des moyens pour commander des opérations préliminaires et/ou postérieures à une pulvérisation choisies, ces moyens comportant des vannes, éventuellement des moteurs, et étant équipés de moyens pour informer un opérateur de la situation de ces vannes et moteurs, et
- un organe de contrôle (8) relié auxdits moyens,
   caractérisé en ce que ledit organe de contrôle comporte une mémoire capable de conserver les indications des capteurs qui doivent correspondre à au moins deux desdites opérations préliminaires ou postérieures à la pulvérisation choisies parmi :
   - le remplissage de la cuve de pulvérisation,
   - l'introduction d'un produit de traitement dans la cuve de pulvérisation,
   - l'agitation du contenu de la cuve de pulvérisation,
   - le remplissage d'une cuve de rinçage,
   - le rinçage de la cuve de pulvérisation,
   - le rinçage de la rampe,
   - le rinçage du circuit de fluide de pulvérisation,
- des moyens pour afficher la nature de l'opération que l'opérateur désire exécuter, et des moyens pour informer l'opérateur au sujet de la concordance entre les indications actuelles des capteurs et les indications conservées en mémoire et correspondant à l'opération affichée.

Les moyens pour informer l'opérateur peuvent être lumineux ou sonores. Ainsi, l'opérateur est avisé que l'opération qu'il envisage peut être réalisée sans fausse manoeuvre, et il peut actionner en conséquence les vannes, commandes de moteur ou autres.

Avantageusement, les moyens d'affichage et d'information sont groupés dans un boîtier de contrôle, afin de faciliter le travail de l'opérateur.

De préférence, les moyens d'affichage et d'information, éventuellement groupés dans le boîtier de contrôle, sont placés en dehors de la cabine de pilotage, en un lieu facilement accessible, si bien que l'opérateur n'a pas à remonter dans cette cabine pour commander les opérations préalables et postérieures à une pulvérisation, qui se font normalement à l'arrêt. Un répétiteur peut cependant être prévu dans la cabine.

Dans une version plus perfectionnée de l'appareil selon l'invention :
- ledit organe de contrôle est capable de commander à distance au moins certains desdits moteurs et desdites vannes,
- ledit organe de contrôle comporte une mémoire capable de conserver des séquences d'actions correspondant à au moins une desdites opérations préliminaires ou postérieures à la pulvérisation,
- ledit organe de contrôle est apte à commander au moins certaines desdites séquences d'actions en fonction d'un ordre reçu et des indications desdits capteurs,
- l'organe de contrôle comprend en outre un boîtier de commande, pourvu de moyens permettant à un opérateur d'ordonner une opération programmée, et des moyens pour informer l'opérateur du déroulement de l'opération et/ou de lui signaler une anomalie.

Ainsi, l'opérateur n'a plus à aller lui-même actionner une vanne, une commande de moteur ou autre, l'organe de contrôle s'en charge, et l'informe du déroulement de l'opération.

Avantageusement, le boîtier de commande est confondu avec le boitier de contrôle mentionné ci-dessus.

De préférence, l'organe de contrôle est apte à commander au moins une opération parmi les suivantes :
- remplissage de la cuve de pulvérisation par transfert de liquide depuis l'extérieur,
- introduction d'un produit de traitement dans la cuve,
- agitation du contenu de la cuve de pulvérisation,
- rinçage d'un élément parmi ceux de l'ensemble de pulvérisation : cuve, pompe, pulvérisateurs, circuit de fluide, filtres,
- transfert de liquide de rinçage depuis la cuve de rinçage vers les éléments de l'ensemble de pulvérisation et en sens inverse,
- transfert de liquide d'un élément de l'ensemble de pulvérisation vers l'extérieur.

Il est intéressant de prévoir que l'organe de contrôle est, en outre, apte à commander un transfert de liquide entre deux points extérieurs à l'appareil. Il ne s'agit pas là, spécifiquement, d'une opération préalable ou postérieure à une pulvérisation, mais l'utilisateur trouve avantage à utiliser les moyens de pompage de l'appareil pour transférer, dans un but qui peut être différent, un liquide d'un endroit à un autre.

Avantageusement aussi, l'organe de contrôle comporte un temporisateur programmable apte à commander la succession automatique de certaines opérations.

L'invention va maintenant être exposée plus en détail à l'aide d'un exemple pratique, illustré avec les dessins, parmi lesquels :
Figure 1 est une vue schématique simplifiée d'ensemble, en perspective, d'un ensemble tracteur-remorqueur équipé conformément à l'invention.
Figure 2 est un schéma des conduits de fluide et de liaisons électriques du dispositif selon l'invention.
Figure 3 est une vue de face du tableau d'affichage de l'organe de contrôle.
Figure 4 est un schéma partiel montrant la circulation des fluides lors de la fonction "Remplissage de la cuve de pulvérisation et amorçage plus incorporation du produit de traitement, plus turbo".
Figure 5 est une vue de face du tableau d'affichage d'une variante de l'invention.

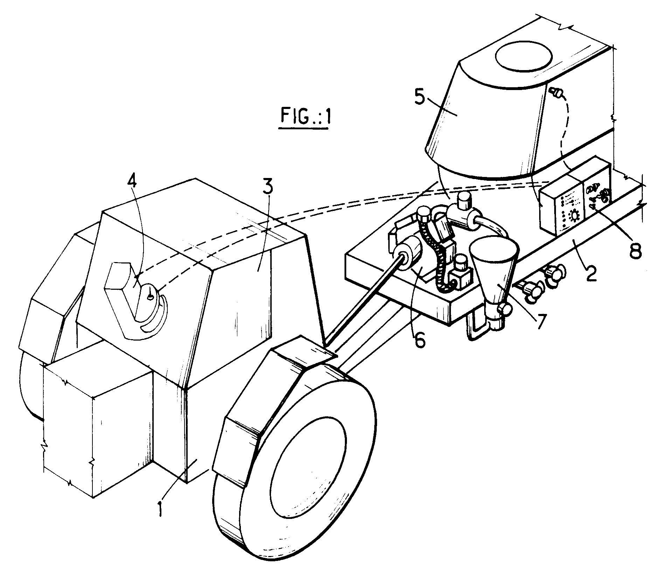

La figure 1 montre un tracteur 1, représenté en partie, associé à une remorque 2, également représentée en partie. La cabine de pilotage 3 du tracteur contient les organes de conduite du tracteur, non représentés, et un ensemble 4 de commande et de contrôle des opérations de pulvérisation, d'un type connu en soi, ici un "INTEGRAL" de la Société Caruelle.

La remorque porte une cuve de pulvérisation 5, visible en partie, une pompe de circulation 6, qui peut envoyer du liquide depuis la cuve de pulvérisation 5 à une rampe de pulvérisation située à l'arrière et non représentée. On a également représenté une trémie 7 pour un produit de traitement à incorporer au liquide, et quelques unes des multiples conduites dont la remorque est équipée.

La remorque porte également un organe de contrôle 8, qui est un élément de l'invention et sera décrit plus en détail.

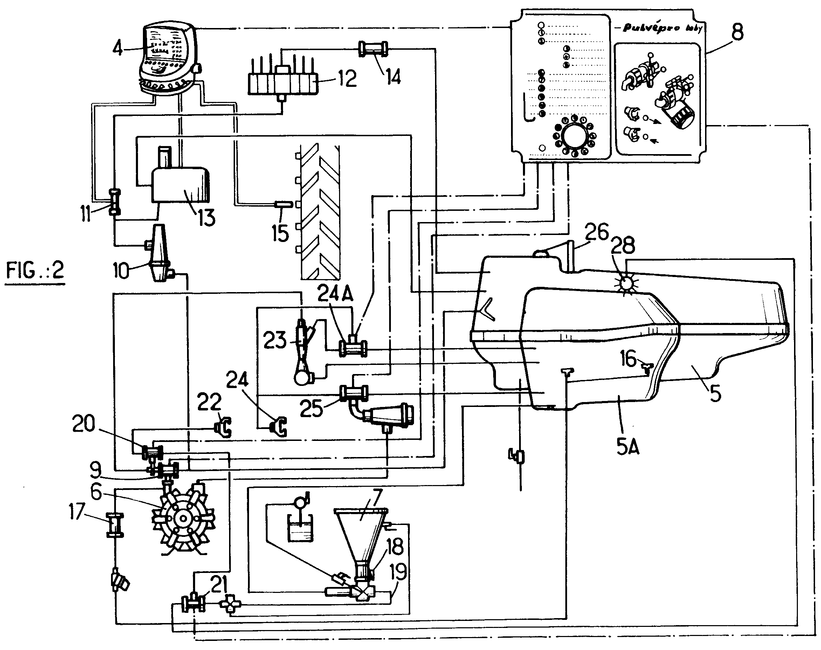

La figure 2 est un schéma montrant les éléments nécessaires pour les opérations préalables et postérieures à une pulvérisation, et, en trait double et mixte respectivement, les liaisons électriques reliant les divers éléments à l'ensemble de commande 4 et à l'organe de contrôle 8.

On retrouve la cuve de pulvérisation 5, la pompe 6, et la trémie 7 pour le produit de traitement.

Le refoulement de la pompe 6 comporte une première vanne à trois voies 9 de clôture générale, qui relie la pompe soit à la cuve de pulvérisation 5, soit aux rampes de pulvérisation par l'intermédiaire d'un filtre 10, d'un débitmètre 11 relié à l'ensemble 4 de commande de pulvérisation et d'un répartiteur électrique de portion de rampe 12, également commandé par l'ensemble 4. Un motorégulateur 13 et une vanne de retour 14, également commandés par l'ensemble 4, contrôlent des retours de liquide vers la cuve 5. On a représenté en 15 un capteur de vitesse de roue de tracteur, également relié à l'ensemble 4.

La pompe 6 est également reliée à des organes d'agitation 16 situés dans la cuve de pulvérisation 5, à travers une vanne 17.

La trémie 7 de produit de traitement est équipée d'une vanne 18 commandée manuellement, et qui permet d'introduire le produit de traitement dans un conduit 19 qui relie la pompe 6 à la cuve de pulvérisation 5 à travers la vanne 9 et deux autres vannes à trois voies 20 et 21, également reliées à l'organe de contrôle 8, et qui permettent d'envoyer du liquide soit dans la conduite 19 soit vers un raccord 22 de transfert vers l'extérieur.

Le refoulement de la pompe 6 est également relié à un hydro-remplisseur 23 qui permet d'envoyer du liquide dans la cuve soit à partir de la cuve de pulvérisation elle-même pour une recirculation, soit à partir de l'extérieur par un raccord pompier 24 à l'aide d'une vanne 24A. Une autre vanne 25 permet de relier l'aspiration de la pompe soit à la cuve de pulvérisation 5 soit à une cuve de rinçage 5A placée à l'intérieur de la cuve de pulvérisation 5. Bien entendu, ces deux vannes sont reliées à l'organe de contrôle 8.

La référence 26 désigne une jauge à flotteur qui sert à signaler à l'organe de contrôle 8 l'état de remplissage de la cuve de pulvérisation 5. D'autres capteurs destinés notamment à signaler l'état de remplissage de la cuve de rinçage 5A, les débits de liquide dans des conduites, la vitesse de rotation de la pompe 6, etc.. n'ont pas été représentés. Ils sont tous reliés à l'organe de contrôle. Certains d'entre eux, comme par exemple un détecteur de niveau maximum, sont également reliés à l'ensemble de commande de pulvérisation 4.

La référence 28 désigne un dispositif de nettoyage des parois intérieures de la cuve, à jets rotatifs, du type LAV'TON (marque déposée).

Le régime de la pompe 6 est, lui aussi, contrôlé par l'organe de contrôle 8.

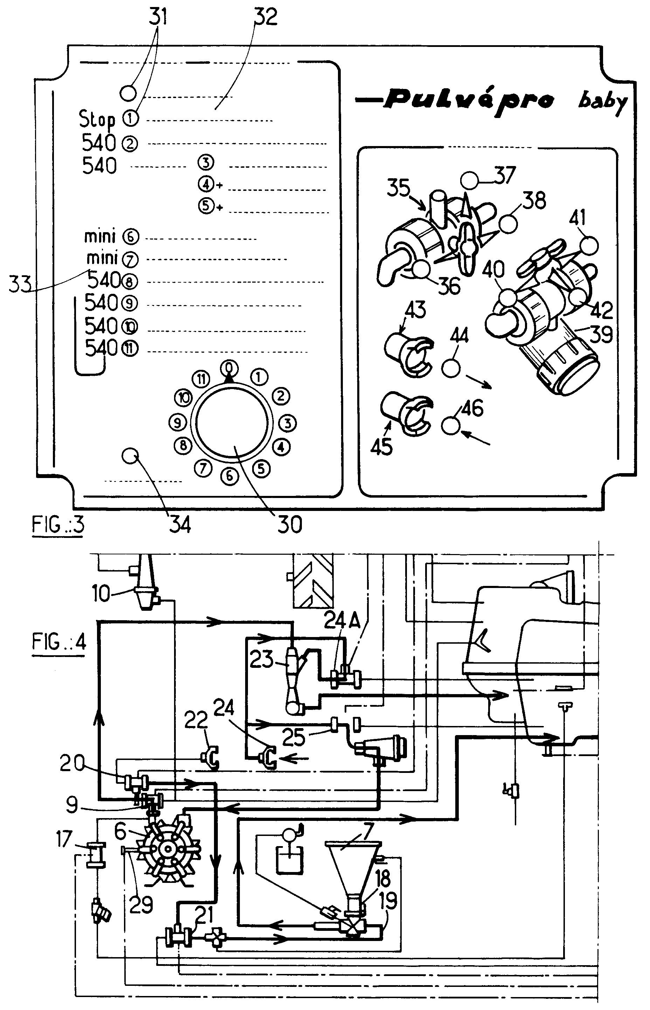

On va maintenant décrire le panneau d'affichage de l'organe de contrôle en se référant à la figure 3.

La référence 30 désigne un sélecteur à douze positions, destinées à sélectionner la fonction choisie. A chacune de ces positions correspond une diode LED 31 de visualisation de la fonction choisie. Dans l'exemple décrit, ces douze fonctions sont les suivantes :
- (0) Mode "Pulvérisation"
- (1) Nettoyage des filtres
- (2) Incorporation de produit de traitement dans la cuve de pulvérisation
- (3) Amorçage du remplissage de la cuve de pulvérisation,
- (4) Remplissage de la cuve de pulvérisation plus incorporation du ou des produits de traitement,
- (5) Remplissage de la cuve de pulvérisation plus incorporation du ou des produits de traitement, plus turbo,
- (6) Rinçage de la rampe,
- (7) Rinçage des accessoires,
- (8) Nettoyage de la cuve de pulvérisation en circuit fermé,
- (9) Lavage de la cuve de pulvérisation en circuit ouvert,
- (10) Transfert de l'intérieur vers l'extérieur,
- (11) Transvasement entre deux points extérieurs.

Ces fonctions sont rappelées en abrégé en 32, à droite de chaque diode LED 31. A gauche de chaque diode LED 31, la vitesse optimale de la pompe 6 pour la fonction considérée est rappelée en 33.

Le lecteur comprendra que lorsque le sélecteur est en position "Mode Pulvérisation", l'ensemble de commande 4 est activé et contrôle le processus de pulvérisation.

On notera que l'énoncé de la fonction n° 5 ne diffère de celui de la fonction n° 4 que par l'adjonction des mots "plus turbo". Il s'agit d'une des phases de remplissage dans laquelle on remplit la cuve de pulvérisation par le raccord 24 (voir la figure 2) au moyen de la pompe 6 avec la vanne trois voies 25 orientée vers la gauche et, simultanément, au moyen de l'hydro-remplisseur 23 avec la vanne 24A orientée vers la gauche. Comparativement aux fonctions 3 et 4, cette fonction 5 permet d'augmenter des débits de remplissage de 40% environ. La fonction 5 est illustrée à la figure 4.

La référence 34 désigne une diode LED de validation de la fonction choisie. Le rôle de cette diode est le suivant: lorsqu'une fonction est choisie à l'aide du sélecteur 30, le dispositif vérifie si les vannes à commande manuelle sont bien dans la position correspondant à la fonction choisie, et il envoie des signaux de commande aux vannes à commande électrique. La diode 34 ne s'allume que lorsque le dispositif a contrôlé que toutes les vannes sont en position correcte pour la fonction choisie.

On notera que certaines fonctions, comme les fonctions 3 à 5, ou 6 à 8, peuvent se succéder automatiquement grâce à une temporisation programmable.

La partie droite du panneau frontal de l'organe de contrôle est affectée à des diagnostics.

Un dessin 35 représente une vanne à trois voies qui est la vanne 24A mentionnée ci-dessus. Trois diodes LED 36, 37, 38 sont prévues pour s'allumer afin de visualiser la situation de la vanne 24A.

Un autre dessin 39 représente la vanne 25 et est associé à trois autres diodes LED 40, 41, 42 prévues pour s'allumer afin de visualiser la situation de cette vanne 25.

Sur la même partie droite du panneau frontal, un dessin 43 représente le raccord 22, et il est associé à une diode LED 44 qui s'allume lorsque ce raccord est branché. De même, un dessin 45 représente le raccord 24 et la diode LED associée 46 s'allume quand ce raccord est branché.

On observera, en se reportant à la figure 4, que, si les dessins 35 et 39 sont disposés comme cela est représenté sur cette figure, les diodes LED 38, 40 et 46 du panneau d'affichage de la figure 3 seront allumées pour la fonction 5, les autres diodes LED étant éteintes.

Bien entendu, il est possible, sans sortir du cadre de l'invention, de visualiser d'autres éléments de diagnostic.

De même, le sélecteur 30 peut être prévu pour sélectionner d'autres fonctions que celles qui sont mentionnées dans l'exemple décrit, soit qu'il comporte plus de positions, soit que certaines des fonctions soient remplacées par d'autres qui ne figurent pas sur la liste donnée plus haut. Parmi ces fonctions, on peut citer :
- Remplissage de la cuve de rinçage,
- Rinçage de la pompe,
- Rinçage de la cuve de rinçage,
- Agitation de la cuve de pulvérisation,
- Transfert du liquide de la cuve de rinçage vers l'extérieur.

On observera que si, au lieu de comprendre une seule cuve de pulvérisation, l'appareil en comprend plusieurs, le sélecteur 30, ou un sélecteur associé, pourra choisir entre plusieurs positions connues, par exemple :
- cuve 1, seule en circuit
- cuve 2, seule en circuit
- cuves 1 et 2 en circuit.

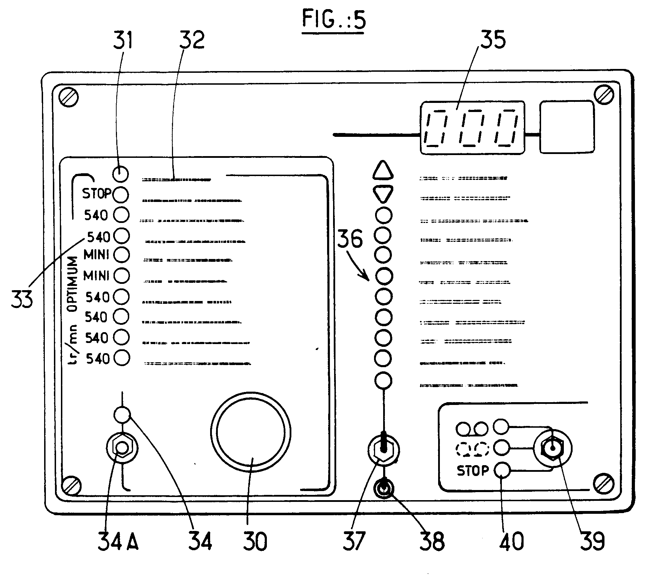

La figure 5 représente le panneau d'affichage d'une version plus perfectionnée de l'appareil selon l'invention, dans laquelle l'organe de contrôle 8 est capable de commander à distance certains des moteurs et des vannes. La partie gauche du panneau ressemble beaucoup à celle du panneau de la figure 3. Une différence importante consiste dans la présence, à côté de la diode LED 34, d'un poussoir de validation 34A. La diode LED 34 n'est pas une diode de validation, mais une diode d'autorisation de validation. Lorsque le sélecteur 30 est tourné jusqu'à une position donnée, la diode LED 31 correspondant se met à clignoter, et, si l'opération est possible, la diode LED 33 se met également à clignoter. Si l'opération sélectionnée est impossible, par exemple commander le remplissage de la cuve de pulvérisation alors que la jauge 26 indique qu'elle est pleine, la validation est impossible et la diode LED 34 ne s'allume pas. Pour valider une fonction, l'opérateur appuie sur le poussoir 34A. La diode LED 31 correspondante reste alors éclairée en continu.

On notera que certaines fonctions, comme les phases d'amorçage et de turbo-remplissage, ou de rinçage de la rampe, des accessoires et de la cuve de pulvérisation, peuvent se succéder automatiquement grâce à une temporisation programmable.

La partie droite du panneau d'affichage diffère, dans sa présentation, de celle de la figure 3. Cette partie droite est affectée à des diagnostics et des conseils. Un afficheur 35 indique la vitesse de la pompe, fournie par le capteur 29. Une série de diodes LED 36 s'allume en face d'un nombre égal d'informations et de conseils tels que :
- Augmentez la vitesse de la pompe
- Réduisez la vitesse de la pompe
- Embrayez la pompe auxiliaire
- Fermez la pulvérisation
- Cuve de pulvérisation pleine
- Transférez du liquide
- Rinçage conseillé
- Cuve de rinçage vide
- Anomalie sur vannes
- Cuve de pulvérisation non vidée
- Alarme de niveau (lumineuse).

La référence 37 désigne un interrupteur pour l'arrêt d'une alarme sonore 38, qui signale que la cuve est pleine, ainsi que toute anomalie grave. La référence 39 désigne un deuxième sélecteur, à trois positions, qui permet de choisir entre l'absence d'agitation et deux modes d'agitation. Des diodes LED 40 lui sont associées pour indiquer le mode choisi. Bien entendu, ce sélecteur pourrait être supprimé si le sélecteur 30 comportait un plus grand nombre de positions.

A titre d'exemple, lorsqu'on décide la fonction de rinçage de la cuve de pulvérisation, on place le sélecteur 30 dans la position convenable, et l'actionnement du poussoir 34A commande automatiquement la mise des vannes dans les positions suivantes :
- 9 :: - vers la gauche (sur la figure)
- 17 :: - fermée
- 24A :: - vers la droite
- 25 :: - vers la gauche,
et les contrôles et indications seront les suivants :

| Contrôles | Indications |
|---|---|
| Vitesse de pompe | Augmenter/diminuer la vitesse |
| Position des vannes | Vannes correctes/incorrectes |
| Niveau cuve de pulvérisation | Cuve de pulvérisation pleine, non vidée, |
| Niveau de cuve de rinçage | Cuve de rinçage vide (buzzer) |

## Revendications

1. Appareil mobile de pulvérisation agricole comprenant:
- un ensemble de pulvérisation qui peut être monté sur un véhicule porteur, autonome ou remorqué, et comporte au moins une cuve de pulvérisation (5), une pompe (6), reliée à la cuve de pulvérisation et un circuit de fluide comprenant des pulvérisateurs et des conduits les reliant à la pompe,
- un ensemble de commande (4) pour contrôler le fonctionnement de l'appareil au cours d'une opération de pulvérisation, cet ensemble de commande comprenant un dispositif de commande situé dans une cabine de pilotage à proximité de moyens pour commander les déplacements du véhicule porteur,
- et des moyens pour commander des opérations préliminaires et/ou postérieures à une pulvérisation, choisies, ces moyens comportant des vannes, éventuellement des moteurs, et étant équipés de moyens pour informer un opérateur de la situation de ces vannes et moteurs, et
- un organe de contrôle (8) relié auxdits moyens,
caractérisé en ce que ledit organe de contrôle comporte une mémoire capable de conserver les indications des capteurs qui doivent correspondre à au moins deux desdites opérations préliminaires ou postérieures à la pulvérisation choisies parmi :
- le remplissage de la cuve de pulvérisation,
- l'introduction d'un produit de traitement dans la cuve de pulvérisation,
- l'agitation du contenu de la cuve de pulvérisation,
- le remplissage d'une cuve de rinçage,
- le rinçage de la cuve de pulvérisation,
- le rinçage de la rampe,
- le rinçage du circuit de fluide de pulvérisation,
- des moyens pour afficher la nature de l'opération que l'opérateur désire exécuter, et des moyens pour informer l'opérateur au sujet de la concordance entre les indications actuelles des capteurs et les indications conservées en mémoire et correspondant à l'opération affichée.

2. Appareil selon la revendication 1, caractérisé en ce que lesdits moyens d'affichage et d'information sont groupés dans un boitier de contrôle.

3. Appareil selon l'une des revendications 1 ou 2, caractérisé en ce que les moyens d'affichage et d'information sont placés en dehors de la cabine de pilotage.

4. Appareil selon l'une des revendications 1 à 3, caractérisé en ce que ledit organe de contrôle (8) est capable de commander à distance au moins certains desdits moteurs et desdites vannes,
en ce que ledit organe de contrôle comporte une mémoire capable de conserver des séquences d'actions correspondant à au moins une desdites opérations préliminaires ou postérieures à la pulvérisation,
en ce que ledit organe de contrôle est apte à commander au moins certaines desdites séquences d'actions en fonction d'un ordre reçu et des indications desdits capteurs,
et en ce que l'organe de contrôle comprend en outre un boîtier de commande, pourvu de moyens permettant à un opérateur d'ordonner une opération programmée, et des moyens pour informer l'opérateur du déroulement de l'opération et/ou de lui signaler une anomalie.

5. Appareil selon les revendications 2 et 4, caractérisé en ce que le boîtier de contrôle est confondu avec le boîtier de commande.

6. Appareil selon l'une des revendications 4 à 5, caractérisé en ce que l'organe de contrôle est apte à commander au moins une opération parmi les suivantes :
- remplissage de la cuve de pulvérisation depuis l'extérieur,
- introduction d'un produit de traitement dans la cuve de pulvérisation,
- agitation du contenu de la cuve de pulvérisation,
- rinçage d'un élément parmi ceux de l'ensemble de pulvérisation : cuve de pulvérisation, pompe, pulvérisateurs, circuit de fluide, filtres,
- transfert de liquide de rinçage depuis la cuve de rinçage vers les éléments de l'ensemble de pulvérisation et en sens inverse,
- transfert de liquide d'un élément de l'ensemble de pulvérisation vers l'extérieur.

7. Appareil selon la revendication 6, caractérisé en ce que l'organe de contrôle est, en outre, apte à commander un transvasement de liquide entre deux points extérieurs à l'appareil.

8. Appareil selon l'une des revendications 1 à 7, caractérisé en ce que l'organe de contrôle comporte un temporisateur programmable apte à commander la succession automatique de certaines opérations.

## Claims

1. A mobile agricultural spraying implement comprising:
- a spray assembly which can be mounted on a carrying vehicle, self-propelled or towed, and includes at least one spray tank (5), a pump (6) connected to the spray tank and a fluid circuit comprising sprays and pipes connecting them to the pump,
- a control assembly (4) for monitoring the operation of the implement during a spraying operation, this control assembly comprising a control device situated in a driver's cab close to means for controlling the displacements of the carrying vehicle,
- and means for controlling selected operations prior and/or subsequent to spraying, these means including valves, possibly motors, and being equipped with means for informing an operator of the situation of these valves and motors, and
- a monitoring member (8) connected to said means, characterized in that said monitoring member includes a memory capable of storing the indications of the sensors which must correspond to at least two of said operations prior or subsequent to spraying, selected from among:
- the filling of the spray tank,
- the introduction of a treatment product into the spray tank,
- the stirring of the contents of the spray tank,
- the filling of a rinsing tank,
- the rinsing of the spray tank,
- the rinsing of the boom
- the rinsing of the spray fluid circuit,
- means for displaying the nature of the operation which the operator wishes to execute, and
- means for informing the operator as to the agreement between the current indications from the sensors and the indications stored in memory and corresponding to the operation displayed.

2. The implement of claim 1, characterized in that said display and information means are grouped together into a monitoring casing.

3. The implement of claim 1 or 2, characterized in that the display and information means are placed outside the driver's cab.

4. The implement of any one of claims 1-3, characterized in that said monitoring member is capable of remotely controlling at least some of said motors and said valves,
- said monitoring member includes a memory capable of storing sequences of actions corresponding to at least one of said operations prior or subsequent to spraying,
- said monitoring member is capable of controlling at least some of said sequences of actions as a function of an order received and of the indications of said sensors, and
- said monitoring member furthermore comprises a control casing, provided with means allowing an operator to order a programmed operation, and means for informing the operator of the progress of the operation and/or for signalling an anomaly to him.

5. The implement of claims 2 and 4, characterized in that the control casing and the monitoring casing are merged.

6. The implement of one of claims 4 and 5, characterized in that the monitoring member is capable of controlling at least one operation from the following:
- filling the spray tank by transfer of liquid from outside,
- introducing a treatment product into the spray tank,
- stirring the contents of the spray tank,
- rinsing one element of those of the spray assembly: tank, pump, sprays, fluid circuit, filters,
- transfer of rinsing liquid from the rinsing tank to the elements of the spray assembly and in the opposite direction,
- transferring liquid from an element of the spray assembly to outside.

7. The implement of claim 6, characterized in that the monitoring member is furthermore capable of controlling a transfer of liquid between two points outside the implement.

8. The implement of one of claims 1-7, characterized in that the monitoring member includes a programmable timer capable of controlling the automatic follow-on of some operations.

## Patentansprüche

1. Landwirtschaftliche bewegliche Feldspritze mit
- einer Spritzeinheit, die auf einem selbsttätig angetriebenen oder gezogenen Trägerfahrzeug angebracht werden kann und mindestens einen Spritzbehälter (5), eine mit dem Spritzbehälter verbundene Pumpe (6) und einen Strömungsmittelkreis besitzt, welcher Spritzdüsen und diese mit der Pumpe verbindende Leitungen aufweist,
- einer Steuereinheit (4) zum Steuern der Betriebsweise der Feldspritze während eines Spritzvorganges, wobei diese Steuereinheit eine Steuervorrichtung aufweist, die in einer Fahrerkabine in der Nähe von Mitteln zum Steuern der Bewegung des Trägerfahrzeuges angeordnet ist,
- sowie Mitteln zum Steuern ausgewählter Arbeitsvorgäng vor und/oder nach einem Spritzvorgang, wobei diese Mittel Ventile und ggfs. Motoren aufweisen und mit Mitteln zum Informieren einer Bedienungsperson über den Betriebszustand dieser Ventile und Motoren versehen sind, und
- einem Kontrollgerät (8), das mit diesen Mitteln verbunden ist,
dadurch gekennzeichnet, daß das Kontrollgerät einen Speicher zum Speichern von Fühlersignalen aufweist, die mindestens zwei Arbeitsgängen vor und nach dem Spritzvorgang entsprechen, welche aus den folgenden Arbeitsvorgängen ausgewählt sind:
- Füllen des Spritzbehälters,
- Einbringen eines Behandlungsmittels in den Spritzbehälter,
- Umrühren des Inhalts des Spritzbehälters,
- Füllen eines Spülbehälters,
- Spülen des Spritzbehälters,
- Spülen des Spritzdüsenarmes,
- Spülen des Spritzflüssigkeitskreises,
- sowie Mittel zum Anzeigen der Art des Arbeitsvorganges, den die Bedienungsperson ausführen möchte, und Mittel zum Informieren der Bedienungsperson bezüglich der Übereinstimmung zwischen den Istwerten der Fühler und den im Speicher gespeicherten und dem angezeigten Arbeitsvorgang entsprechenden Werten.

2. Feldspritze nach Anspruch 1, dadurch gekennzeichnet, daß die besagten Anzeige- und Informationsmittel in einem Kontrollkasten untergebracht sind.

3. Feldspritze nach Anspruch 1 oder 2, dadurch gekennzeichnet, daß die Anzeige- und Informationsmittel außerhalb der Fahrerkabine angeordnet sind.

4. Feldspritze nach einem der Ansprüche 1 bis 3, dadurch gekennzeichnet, daß das Kontrollgerät (8) in der Lage ist, mindestens einige der Motoren und Ventile fernzusteuern,
daß das Kontrollgerät einen Speicher aufweist, der in der Lage ist, Folgen von Arbeitsvorgängen entsprechend mindestens einem der vorgenannten Arbeitsvorgänge vor oder nach dem Spritzvorgang zu speichern,
daß das Kontrollgerät in der Lage ist, mindestens einige der Arbeitsvorgangfolgen in Abhängigkeit von einem empfangenen Befehl und Werten der Fühler zu steuern,
und daß das Kontrollgerät mindestens einen Steuerkasten aufweist, welcher versehen ist mit Mitteln, die es einer Bedienungsperson erlauben, einen programmierten Arbeitsvorgang auszulösen, und Mitteln zum Informieren der Bedienungsperson über den Ablauf des Arbeitsvorganges und/oder um ihm einen Fehler zu signalisieren.

5. Feldspritze nach den Ansprüchen 2 und 4, dadurch gekennzeichnet, daß der Kontrollkasten mit dem Steuerkasten zusammengefaßt ist.

6. Feldspritze nach Anspruch 4 oder 5, dadurch gekennzeichnet, daß das Kontrollgerät in der Lage ist, mindestens einen der folgenden Arbeitsvorgänge zu steuern:
- Füllen des Spritzbehälters von außen,
- Einbringen eines Behandlungsmittels in den Spritzbehälter,
- Umrühren des Inhaltes des Spritzbehälters,
- Spülen eines der folgenden Elemente der Spritzeinheit: Spritzbehälter, Pumpe, Spritzdüsen, Strömungsmittelkreis, Filter,
- Fördern der Spülflüssigkeit aus dem Spülbehälter zu den Elementen der Spritzeinheit und umgekehrt,
- Fördern der Flüssigkeit eines Elementes der Spritzeinheit nach außen.

7. Feldspritze nach Anspruch 6, dadurch gekennzeichnet, daß das Kontrollgerät ferner in der Lage ist, ein Umfüllen von Flüssigkeit zwischen zwei Punkten außerhalb der Feldspritze zu steuern.

8. Feldspritze nach einem der Ansprüche 1 bis 7, dadurch gekennzeichnet, daß das Kontrollgerät eine programmierbare Zeitsteuerung aufweist, die in der Lage ist, die selbsttätige Abfolge bestimmter Arbeitsvorgänge zu steuern.
